(19) Europäisches Patentamt / European Patent Office / Office européen des brevets

(11) **EP 1 996 899 B1**

(12) **EUROPÄISCHE PATENTSCHRIFT**

(45) Veröffentlichungstag und Bekanntmachung des Hinweises auf die Patenterteilung:
**17.09.2014  Patentblatt 2014/38**

(21) Anmeldenummer: **07726810.0**

(22) Anmeldetag: **12.03.2007**

(51) Int Cl.:
*G01C 19/56* (2012.01)          *G01C 19/5712* (2012.01)
*G01C 19/574* (2012.01)          *G01P 15/08* (2006.01)

(86) Internationale Anmeldenummer:
**PCT/EP2007/052304**

(87) Internationale Veröffentlichungsnummer:
**WO 2007/104742 (20.09.2007 Gazette 2007/38)**

(54) **DREHRATENSENSOR MIT KOPPLUNGSBALKEN**

RATE-OF-ROTATION SENSOR HAVING A COUPLING BAR

CAPTEUR DE TAUX DE ROTATION AVEC POUTRES D'ACCOUPLEMENT

(84) Benannte Vertragsstaaten:
**DE FR HU IT**

(30) Priorität: **10.03.2006   DE 102006011572**
**12.03.2007   DE 102007012163**

(43) Veröffentlichungstag der Anmeldung:
**03.12.2008   Patentblatt 2008/49**

(73) Patentinhaber: **Continental Teves AG & Co. oHG**
**60488 Frankfurt (DE)**

(72) Erfinder:
• **GÜNTHNER, Stefan**
**60489 Frankfurt am Main (DE)**
• **HARTMANN, Bernhard**
**61189 Friedberg (DE)**

(56) Entgegenhaltungen:
EP-A- 1 365 211          WO-A-03/104823
WO-A-2006/034706          WO-A1-2005/103620
US-A1- 2005 072 231

**Beschreibung**

Die Erfindung betrifft einen Drehratensensor gemäß Oberbegriff von Anspruch 1, ein Verfahren zur Herstellung eines Drehratensensors gemäß Oberbegriff von Anspruch 16 sowie die Verwendung des Drehratensensors in Kraftfahrzeugen.

Drehratensensoren werden üblicherweise verwendet, um die Winkelgeschwindigkeit eines Systems um eine definierte Achse zu erfassen. Ein wichtiges Anwendungsgebiet von Drehratensensoren ist die Automobiltechnik, zum Beispiel in Fahrdynamikregelungssystemen wie dem elektronischen Stabilitätsprogramm (ESP) oder einer so genannten Rollover-Detektion. Solche sicherheitskritischen Einsatzbereiche stellen dabei besondere Anforderungen an die Drehratensensoren.

Druckschrift US 6,230,563 B1 beschreibt einen Z-AchsenDrehratensensor, welcher also eine Drehrate um dessen Z-Achse erfassen kann, wobei die Grundfläche seines Substrats parallel zur x-y-Ebene (kartesisches Koordinatensystem) ausgerichtet ist. Dieser Drehratensensor weist zwei seismische Massen auf, welche mittels eines Kopplungsbalkens miteinander gekoppelt sind, wobei der Kopplungsbalken an einer Torsionsfeder am Substrat aufgehängt ist. Die seismischen Massen sind direkt am Substrat aufgehängt, wobei diese Aufhängung so ausgebildet ist, dass sie sowohl für die Antriebsals auch die Auslesemode des Drehratensensors die Auslenkbarkeit der seismischen Massen gewährleisten muss, wodurch ein unerwünschtes Übersprechen zwischen beiden Schwingungs-moden erfolgen kann, welches die Messung negativ beeinflussen kann.

In Druckschrift WO 2006/034706 A1 wird vorgeschlagen, die seismischen Massen an einem Rahmen aufzuhängen, welcher seinerseits am Substrat aufgehängt ist. Hierdurch lassen sich Freiheitsgrade in der Aufhängung in sofern einschränken, dass beispielsweise die Rahmenstruktur samt den seismischen Massen in der Antriebsmode schwingt, in der Auslesemode allerdings nur die seismischen Massen schwingen, wodurch ein Übersprechen zwischen den beiden Schwingungsmoden weitgehend vermieden werden kann. Allerdings ist die Kopplung der seismischen Massen über die vorgeschlagene Kopplungseinheit empfindlich gegenüber gleichgerichteten Störanregungen in Messrichtung wie beispielsweise Stößen.

Aus der US 2005/0072231 A1 ist ein Sensor mit zueinander orthogonalen x-, y-und z-Achsen zur Erfassung einer Drehrate um die z-Achse bekannt. Der Sensor umfasst dabei ein Substrat und eine Hauptmasse, welche in Bezug auf die x-Achse symmetrisch am Substrat durch eine Vielzahl von inneren und äußeren Verankerungen aufgehängt ist. Weiterhin umfasst der Sensor mindestens zwei Prüfmassen, die symmetrisch in Bezug auf die x-Achse und die y-Achse sind, sowie je einen angetriebenen Rahmen, der je eine der Prüfmassen umgibt und an dieser und externen Ankerpunkten mittels Biegemitteln befestigt ist. Des Weiteren umfasst der Sensor einen Satz von Antriebsbanken und einen ersten Satz von Erfassungsbanken für jeden angetriebenen Rahmen zum Oszillieren entlang der x-Achse, einen zweiten Satz von Erfassungsbanken an jeder Prüfmasse zum Erfassen von Coriolis-Bewegungen entlang der y-Achse und zumindest zwei rotierende steife Balken, die jeweils mittig an einem inneren Ankerpunkt befestigt sind und die entlang der y-Achse ausgerichtet in ihrer Ruheposition sind sowie in der Lage sind, sich über ihre Ankerpunkte in einer xy-Ebene senkrecht zur z-Achse zu drehen. Schließlich umfasst der Sensor eine Vielzahl von inneren Rahmenunterstützungen, die asymmetrisch in Bezug auf die y-Achse angeordnet sind, die die rotierenden steifen Balken mit dem Rahmen verbinden und ihrerseits eine Vielzahl von nichtrotierenden steifen Balken und eine Vielzahl von Biegemitteln umfassen, um Rahmenbewegungen überwiegend entlang der x-Achse in gegenphasigen Bewegungen nur derart zu ermöglichen, dass sich Coriolis-induzierte gegenphasige Bewegung der Prüfmassen entlang der y-Achse ergeben.

Die WO 2005/103620 A1 beschreibt einen Trägheitssensor, der ein Substrat und mindestens zwei Paare von Sensorelementen, die in einer linearen Anordnung in einer Ebene oberhalb des Substrats angeordnet sind, umfasst. Jedes Paar von Sensorelementen beinhaltet ein erstes Sensorelement mit einem ersten Resonator, der in einem ersten Rahmen aufgehängt ist und ein zweites Sensorelement mit einem zweiten Resonator, der in einem zweiten Rahmen aufgehängt ist. Alle Rahmen sind entlang einer ersten Achse in der Ebene ausgerichtet und die Rahmen eines jeden Paars sind derart konfiguriert, dass sie auf zueinander parallelen Achsen in einer Ebene senkrecht zu der ersten Achse gegenphasig bewegen.

Die Aufgabe der vorliegenden Erfindung besteht darin, den Stand der Technik zu verbessern und insbesondere parasitäre Moden und Störauslenkungen der seismischen Massen zu vermeiden oder zu verringern.

Die Aufgabe wird erfindungsgemäß gelöst durch den Drehratensensor gemäß Anspruch 1 und das Verfahren zur Herstellung eines Drehratensensors gemäß Anspruch 16.

Der Erfindung liegt der Gedanke zu Grunde, ausgehend vom Stand der Technik, dass der Drehratensensor mindestens zwei Basiselemente aufweist, welche jeweils einen offenen oder geschlossenen Rahmen, eine Aufhängung des Rahmens am Substrat, zumindest eine seismische Masse und eine Aufhängung der seismischen Masse am Rahmen umfassen. Zusätzlich werden zumindest zwei Basiselemente durch mindestens einen Kopplungsbalken miteinander gekoppelt.

Die Ausleseeinrichtungen sind vorzugsweise zur Erfassung von Auslenkungen der seismischen Massen und/oder der Rahmen vorgesehen und entsprechend weisen die seismischen Massen und/oder die Rahmen jeweils mindestens ein Mittel zum Erfassen von Auslenküngen auf, welche/s jeweils zumindest einer Ausleseeinrichtung zugeordnet ist/sind.

Zweckmäßigerweise kann die Kopplung des Kopplungsbalkens mit jedem Teil des Basiselements, wie beispielsweise einer seismischen Masse, dem Rahmen und/oder einem Aufhängungselement/ Federelement ausgebildet sein.

Unter einem Substrat wird ein Grund- und/oder Trägerkörper und/oder Gehäuseteil des Drehratensensors verstanden, welcher insbesondere ein im Wesentlichen unstrukturierter Teil des Wafers ist aus welchem der Drehratensensor ausgebildet ist. Besonders bevorzugt besteht das Substrat aus kristallinem oder polykristallinem Silizium oder einer oder mehreren Schichten Halbleitermaterials und/oder Metall/en.

Unter einem Rahmen wird vorzugsweise ein offener und/oder geschlossener Rahmen verstanden, welcher insbesondere eine oder mehrere seismische Massen zumindest dreiseitig umfängt und besonders bevorzugt einen im Wesentlichen rechteckigen Innen- und Außenumfang aufweist. Ganz besonders bevorzugt umrahmt der Rahmen bezüglich einer Ebene zumindest teilweise mindestens eine seismische Masse.

Unter einem Federelement wird vorzugsweise ein Torsionsfederelement oder ein Biegefederelement oder ein Federelement verstanden, welches sowohl biegsam, als auch tordierbar ausgebildet ist.

Unter einer Antriebsmode bzw. Primärmode wird eine Eigenmode eines Drehratensensors verstanden, bevorzugt die Eigenschwingung, besonders bevorzugt die Schwingung mit einer Resonanzfrequenz, der mindestens zwei Basiselemente, in welcher die Basiselemente des Drehratensensors insbesondere ohne Einwirkung einer Drehrate schwingen.

Unter einer Auslesemode bzw. Sekundärmode wird eine Eigenmode verstanden, welche sich vorzugsweise aufgrund einer Drehrate und der damit verbundenen Wirkung der Corioliskraft einstellt.

Der Drehratensensor wird vorzugsweise mittels Oberflächenmikromechanik hergestellt. Dabei werden die Strukturen in ein Membranmaterial, insbesondere Silizium, durch besonders bevorzugt anisotropes Trockenätzen im Wesentlichen senkrecht durch die Membran geätzt. Die Ebene der Membrangrundfläche erstreckt sich im Wesentlichen parallel zur Substratoberfläche. An den Stellen, wo die Membran mit dem darunter liegenden Substrat fest verbunden ist, entstehen Ankerpunkte, an denen wiederum entweder Federelemente oder unbewegliche Strukturen befestigt sind. Dadurch können starre Körper, welche an Federn aufgehängt werden, frei schwingend realisiert werden. Die Ankerpunkte sind ganz besonders bevorzugt durch isolierende Schichten voneinander elektrisch isoliert und von außen kontaktierbar.

Das Substrat besteht zweckmäßigerweise aus Silizium und die Membran insbesondere aus leitendem polykristallinem Silizium oder ebenfalls aus kristallinem Silizium.

Die Substratebene bzw. die Grundfläche des Substrats ist bevorzugt so ausgerichtet, dass sie parallel zur x-y-Ebene eines kartesischen Koordinatensystems ausgerichtet ist. Die z-Achse dieses Koordinatensystems verläuft senkrecht zur Substratebene. Die Koordinatenachsen sind bzgl. der Ausbildung und Anordnung von Komponenten des Drehratensensors insbesondere parallel verschiebbar.

Unter einem Antriebsmittel wird vorzugsweise ein Kammantrieb mit zwei ineinander greifenden, gegeneinander elektrisch im Wesentlichen isolierten, Kämmen verstanden, von denen einer mit mindestens einem Basiselement und der andere mit dem Substrat, verbunden ist. Durch Anlegen einer Differenzspannung an diese Kämme können diese gegeneinander bewegt werden. Mittels mindestens eines Antriebsmittels wird insbesondere die Antriebsmode erzeugt.

Unter einer Ausleseeinrichtung wird zweckmäßigerweise eine Einrichtung verstanden, welche mindestens zwei Elektroden oder andere elektrische/elektronische Elemente aufweist, deren Kapazität/Kapazitätsänderungen im Verbünd und/oder deren Potentialdifferenz zueinander gemessen wird. Insbesondere weist solch eine Auslesevorrichtung ineinander greifende, gegeneinander elektrisch im Wesentlichen isolierte, Kammstrukturen auf, von denen eine am Basiselement, besonders bevorzugt an dem Rahmen und/oder einer oder mehreren seismischen Massen befestigt ist, und/oder am Kopplungsbalken und die andere am Substrat. Alternativ oder zusätzlich weist eine Auslesevorrichtung insbesondere ein Elektrodenpaar auf.

Das mindestens eine Antriebsmittel treibt die mindestens zwei Basiselemente zweckmäßigerweise in y-Richtung an, wobei der Drehratensensor so ausgelegt ist, dass er Drehraten um die x-Achse und/oder z-Achse erfassen kann. Diese Konstellationen sind messtechnisch besonders günstig, da Auslenkungen der seismischen Massen zu erfassen sind, welche sich aufgrund der Corioliskraft ergeben. Die Corioliskraft wirkt senkrecht zur Antriebsrichtung und senkrecht zur Drehachse.

Es ist bevorzugt, dass der Kopplungsbalken an zumindestens einem Federelement aufgehängt ist, welches insbesondere am Substrat aufgehängt und/oder eingespannt und/oder befestigt ist um mit diesem mindestens einen, besonders bevorzugt zwei, Ankerpunkte bildet. Dabei ist dieses Federelement so ausgebildet und eingespannt, dass es translatorische Auslenkungen des Kopplungsbalkens, insbesondere bezüglich dessen Schwerpunkts, verhindert. Durch diese Maßnahme werden Störauslenkungen/-schwingungen verhindert und/oder unterdrückt, die mitunter die Messung stark negativ beeinflussen.

Es ist zweckmäßig, dass das Federelement an welchem der Kopplungsbalken aufgehängt ist, alternativ und/oder zusätzlich einen Ankerpunkt an einem vom Substrat verschiedenen Körper bzw. Teil des Drehratensensors aufweist.

Der Kopplungsbalken ist vorzugsweise im Wesentlichen bezüglich seines Schwerpunkts an dem zumindest einen Federelement aufgehängt. Insbesondere ist dieser Schwerpunkt gleichzeitig der Mittelpunkt des Kopplungsbalkens bezüglich seiner Länge.

Es ist zweckmäßig, dass das Federelement an welchem der Kopplungsbalken aufgehängt ist, eine Torsionsfeder ist, welche eine rotatorische Auslenkung des Kopplungsbalkens um die z-Achse und/oder die x-Achse ermöglicht. Insbesondere ist diese Torsionsfeder in x- und/oder y- und/oder z- Richtung, besonders bevorzugt in alle drei Raumrichtungen, steif ausgebildet. Hierdurch werden die Freiheitsgrade des Kopplungsbalkens gezielt verringert und Störauslenkungen und/oder Störschwingungen der seismischen Massen können über diese gemeinsame Kopplung mit verminderten Freiheitsgraden vermindert oder unterdrückt werden.

Der Schwerpunkt des Kopplungsbalkens fällt im Wesentlichen vorzugsweise mit dem Schwerpunkt des Drehratensensors zusammen, insbesondere jeweils bezogen auf die x-y-Ebene. Hier-durch bleibt der Schwerpunkt des Kopplungsbalkens in Ruhe, während die seismischen Massen schwingen.

Der Kopplungsbalken ist ganz besonders bevorzugt an zwei oder mehr obig beschriebenen Federelementen aufgehängt.

Der Kopplungsbalken ist zweckmäßigerweise an beiden Enden jeweils mit einer oder mehreren seismischen Masse/n und/oder einer oder mehreren Auslesevorrichtung/en und/oder einem oder mehreren Rahmen über ein oder mehrere Federelement/e oder direkt gekoppelt. Durch solch eine spezielle Kopplung zwischen Kopplungsbalken und seismischer Masse können zusätzliche Freiheitsgrade eingeschränkt werden und/oder die Bewegung so geführt werden, dass Störschwingungen/-auslenkungen vermieden oder unterdrückt werden können. Entsprechend werden Störauslenkungen oder -schwingungen in Auslese- und/oder Antriebsmode/n verhindert oder vermindert.

Es ist bevorzugt, dass die seismischen Massen jeweils um eine Torsionsachse auslenkbar aufgehängt sind und diese Torsionsachse im Wesentlichen parallel zu Antriebsrichtung verläuft. Hierdurch kann weitgehend vermieden werden, dass die Antriebsmoden die Auslesemoden beeinflussen. Es wird also ein Übersprechen zwischen diesen Moden verhindert.

Zwei oder mehr der seismischen Massen, insbesondere sämtliche, weisen vorzugsweise einen Schwerpunkt auf, welcher in z-Richtung außerhalb der durch den jeweiligen Rahmen aufgespannten Ebene und/oder des Raumquaders liegt. Besonders bevorzugt ist eine Seite jeder seismischen Masse, ganz besonders bevorzugt die untere Seite bezüglich der z-Richtung, ballig ausgebildet. Hierdurch kann eine Drehrate erfasst werden, beispielsweise um die z-Achse, welche eine Corioliskraft verursacht, die in Richtung der Rahmenebene wirkt, da durch den ausgelagerten Schwerpunkt dennoch eine Kraftkomponente in z-Richtung wirkt.

Jeder der seismischen Massen ist zweckmäßigerweise eine Ausleseeinrichtung zugeordnet, wodurch die Auslenkungen/Schwingungen der seismischen Massen einzeln bzgl. einer Signalauswertung und/oder -verarbeitung berücksichtigt werden können.

Es ist im Wesentlichen bevorzugt aus dem Differenzsignal der Ausleseeinrichtungen, welche jeweils den einzelnen seismischen Massen eines Basiselements zugeordnet sind, und dem Differenzsignal der Ausleseeinrichtungen, welche unterschiedlichen Basiselementen zugeordnet sind, die erfasste Drehrate zu bestimmen.

Ein Drehratensensor, welcher eine Drehrate um die x-Achse erfassen kann, ist vorzugsweise so ausgebildet, dass der Antrieb der Basiselemente in y-Richtung erfolgt, wobei

- die Rahmen der Basiselemente jeweils durch Federelemente am Substrat aufgehängt sind, welche im Wesentlichen steif in x-Richtung und z-Richtung und elastisch in y-Richtung sind,
- die seismischen Massen jedes Basiselements mittels Federelementen, welche im Wesentlichen, insbesondere ausschließlich, eine Torsion um die y-Achse zulassen und/oder elastisch in z-Richtung sind, am jeweiligen Rahmen aufgehängt sind, und
- der Kopplungsbalken mittels einer Torsionsfeder, welche, insbesondere ausschließlich, Torsionen um die x-Achse zulässt und steif in x- und z-Richtung ist, am Substrat aufgehängt ist und an jedem seiner beiden Enden mittels Federelemengen mit den seismischen Massen jeweils eines Basiselements gekoppelt ist.

Es ist zweckmäßig, dass ein Drehratensensor, welcher eine Drehrate um die z-Achse und/oder um die x- und z-Achse erfassen kann, so ausgebildet ist, dass der Antrieb der Basiselemente in y-Richtung erfolgt, wobei

- die Rahmen der Basiselemente jeweils durch Federelemente am Substrat aufgehängt sind, welche im Wesentlichen steif in x- und z-Richtung und elastisch in y-Richtung sind,
- die seismischen Massen, welche besonders bevorzugt einen Schwerpunkt aufweisen, welcher in z-Richtung außerhalb der durch den jeweiligen Rahmen aufgespannten Ebene und/oder des Raumquaders liegt, jedes Basiselements mittels Federelementen, welche, insbesondere ausschließlich, im Wesentlichen eine Torsion, um die y-Achse zulassen und/oder elastisch in z-Richtung sind, am jeweiligen Rahmen aufgehängt sind, und der Kopplungsbalken mittels einer Torsionsfeder, welche, insbesondere ausschließlich, eine Torsion um die x-Achse, zulässt und steif in x- und z-Richtung ist, am Substrat aufgehängt ist und an seinen beiden Enden jeweils ein separater Teil des Kopplungsbalkens mit dem Mittelstück des Kopplungsbalkens mitte,ls einer Torsionsfeder gekoppelt ist, welche im Wesentlichen steif in x-, y- und z-Richtung ist und Torsionen um die y-Achse zulässt, wobei diese beiden äußerten, separaten Teile des Kopplungsbalkens jeweils mittels Federelementen mit den seismischen Massen jeweils eines Basiselements gekoppelt sind.

Es ist bevorzugt, dass ein Drehratensensor, welcher eine Drehrate um die x-Achse und die z-Achse erfassen kann, so ausgebildet ist, dass der Antrieb der Basiselemente in y-Richtung erfolgt, wobei

- die Rahmen der Basiselemente jeweils durch Federelemente, welche im Wesentlichen steif in z-Richtung und elastisch in y- und x-Richtung sind, am Substrat aufgehängt sind,
- die seismischen Massen jedes Basiselements mittels Federelementen, welche im Wesentlichen, insbesondere ausschließlich, eine Torsion um die y-Achse zulassen und/oder elastisch in z-Richtung sind, am jeweiligen Rahmen aufgehängt sind, und
- der Kopplungsbalken mittels einer Torsionsfeder, welche Torsionen um die x-Achse und die z-Achse zulässt und steif in x- und z-Richtung ist, am Substrat aufgehängt ist und an jedem seiner beiden Enden mittels Federelementen mit den seismischen Massen jeweils eines Basiselements gekoppelt ist.

Der Drehratensensor ist vorzugsweise als ein Mikro-Elektro-Mechanisches-System (MEMS) oder. MEMS-Modul ausgebildet, welches insbesondere mechanische und elektronische Mittel zum Anschluss und/oder Zusammenwirken an/mit weiteren MEMS-Modulen und/oder mit mindestens einer ,insbesondere integrierten, elektronischen Signalverarbeitungsschaltung aufweist.

Alternativ bevorzugt sind die Basiselemente des Drehratensensors als massive seismische Massen ausgebildet, welche somit insbesondere keinen Rahmen aufweisen. Diese Ausbildungsform der Basiselemente und seismischen Massen bezieht sich besonders bevorzugt auf alle Ausführungsformen des Drehratensensors.

Die Erfindung betrifft zusätzlich ein Verfahren zur Herstellung eines Drehratensensors, wobei mittels eines Herstellungsprozesses zur Herstellung mikromechanischer Systeme aus einem Substrat, welches insbesondere aus kristallinem Silizium oder einer oder mehreren Schichten Halbleitermaterials und/oder Metall/en besteht, mikromechanische Elemente ausgebildet werden, wobei, zumindest in Teilen ein obig beschriebener Drehratensensor, besonders bevorzugt entsprechend einem der Ausführungsbeispiele, ausgebildet wird.

Der erfindungsgemäße Drehratensensor ist zur Verwendung in Kraftfahrzeugen, insbesondere in einem Kraftfahrzeugregelungssystem, vorgesehen.

Der oben beschriebene Drehratensensor kann in unterschiedlichen Bereichen zur Erfassen einer oder mehrerer Drehraten und/oder mittels entsprechender Signalverarbeitung zur Erfassung einer oder mehrerer Drehbeschleunigungen verwendet werden. Dabei ist die Verwendung in Fahrzeugen und in der Automatisierungstechnik bevorzugt, insbesondere in Kraftfahrzeuge und Luftfahrzeugen, besonders bevorzugt in den jeweiligen entsprechenden Regelungssystemen. Ganz besonders bevorzugt ist die Verwendung des Drehratensensors als Gierraten- und/oder Gierbeschleunigungssensor in einem Kraftfahrzeugregelungssystem, wie beispielsweise ESP.

Weitere bevorzugte Ausführungsformen ergeben sich aus den Unteransprüche und den nachfolgenden Beschreibungen von Ausführungsbeispielen an Hand von Figuren.

Es zeigen in schematischer Darstellung

Fig. 1     ein Ausführungsbeispiel eines Drehratensensors, mit zwei am Substrat aufgehängte seismischen Massen, welche über einen Kopplungsbalken gekoppelt sind und dieser parasitäre Moden des Antriebsmodes unterdrückt,

Fig. 2     ein beispielhafter Drehratensensor, dessen Kopplungsbalken um die x-Achse tordierbar ist und die Anbindung des Kopplungsbalkens mittels Federelementen an die seismischen Massen,

Fig. 3     eine beispielhafte Veranschaulichung der Feder-Verbindung zwischen seismischer Masse und Kopplungsbalken,

Fig. 4     ein beispielhafter Z-Achsen Drehratensensor mit seismischen Massen ohne Rahmen,

Fig. 5     ein Ausführungsbeispiel eines X-Z-Achsen Drehratensensors mit seismischen Massen ohne Rahmen,

Fig. 6     zwei Ausführungsformen von Basiselementen mit einer seismischer Masse, einmal an einer Torsionsfeder und das andere Mal an einer Biegefeder am Rahmen aufgehängt,

Fig. 7     eine Veranschaulichung der Kräfte und Auslenkungen bei Einwirkung unterschiedlicher Drehraten anhand eines beispielhaften Basiselements,

Fig. 8     ein Ausführungsbeispiel eines Basiselements mit zwei seismischen Massen, sowie die Auswirkungen einer x- und einer z-Drehrate auf diese seismisehen Massen,

Fig. 9     eine beispielhafte seismische Masse mit ausgelagertem Schwerpunkt, sowie die Kräfteverhältnisse bei Auftreten einer Drehrate,

Fig. 10    ein Ausführungsbeispiel eines Basiselements mit zwei seismischen Massen mit ausgelagertem Schwerpunkt, sowie die Kräfteverhältnisse bei Auftreten einer Drehrate,

Fig. 11    verschiedene beispielhafte Signalverläufe bezüglich der Phase eines beispielhaften Basiselements,

Fig. 12    zwei Ausführungsbeispiele von Drehratensensoren zur Unterdrückung parasitärer Antriebsmoden, ein-mal mit gerahmten seismischen Massen, ein anderes Mal mit massiven, ungerahmten seismischen Massen,

Fig. 13    einen beispielhaften X-Achsen Drehratensensor mit je zwei seismischen Massen pro Basiselement,

Fig. 14    ein Ausführungsbeispiel eines X-Z-Achsen Drehratensensors mit vier seismischen Massen und einem geteilten Kopplungsbalken,

Fig. 15    einen beispielhaften X-Z-Achsen Drehratensensor mit einem Kopplungsbalken, welcher um die x- und die z-Achse tordierbar aufgehängt ist und

Fig. 16    ein Ausführungsbeispiel eines X-Z-Achsen Drehratensensors, dessen Kopplungsbalken an jedem Ende jeweils direkt mit der Kammstruktur einer Ausleseeinrichtung verbunden ist.

\

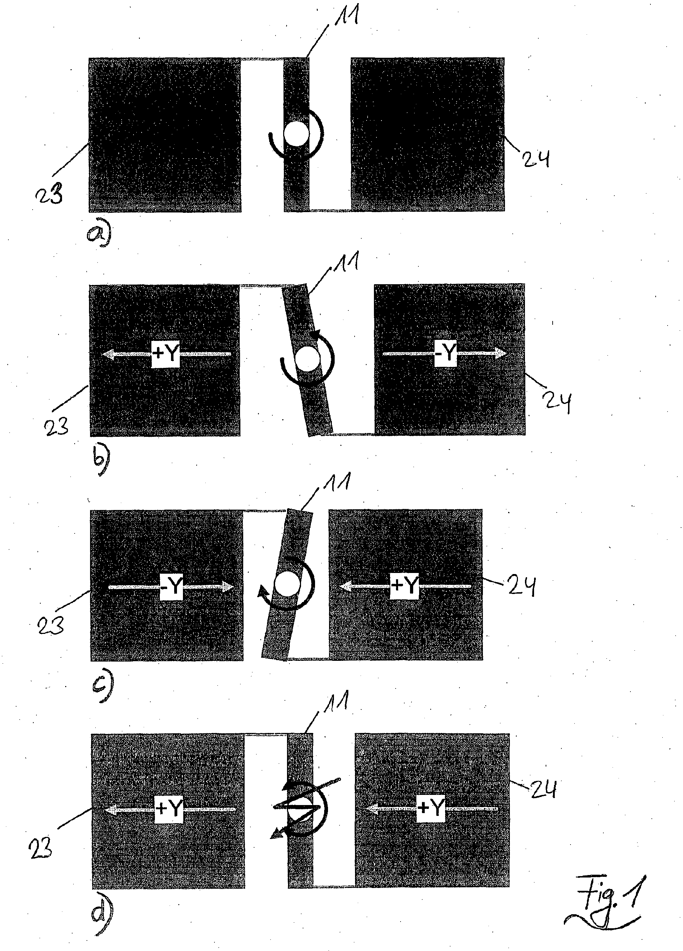

Fig. 1a) zeigt das Aufhängungsschema eines rotatorisch aufgehängten starren Kopplungsbalkens 11, welcher unerwünschte gleichphasige Auslenkungen der seismischen Massen 23 und 24 in der Antriebsmode unterdrückt bzw. verhindert. In der Antriebsmode schwingen seismische Massen 23 und 24 in Y-Richtung gegenphasig zueinander. Fig. 1b) veranschaulicht dabei die Wirkungsweise des Kopplungsbalkens bei der Bewegung der seismischen Massen auseinander, während Fig. 1c) das entsprechende Kopplungsprinzip bei der Bewegung der seismischen Massen 23 und 24 auf einander zu zeigt. Bei einer Bewegung seismischer Massen 23 und 24 auseinander oder aufeinander zu, wird Kopplungsbalken 11 also rotatorisch ausgelenkt, und zwar um die z-Achse. Fig. 1d) veranschaulicht das Wirkungsprinzip des Kopplungsbalkens 11 im Fall, dass seismische Massen 23 und 24 sich, beispielsweise aufgrund einer Störung, gleichgerichtet, in diesem Fall beide in y-Richtung nach links bewegen wollen. Diese Bewegung wird durch Balkenelement 11 aufgrund seiner Aufhängung, welche in y-Richtung steif ausgelegt ist, verhindert bzw. unterdrückt. In Fig. 1 a) bis d) sind die seismischen Massen beispielgemäß nicht, wie in einem zusätzlichen, nicht dargestellten Beispiel, an einem Rahmen sondern direkt am Substrat aufgehängt.

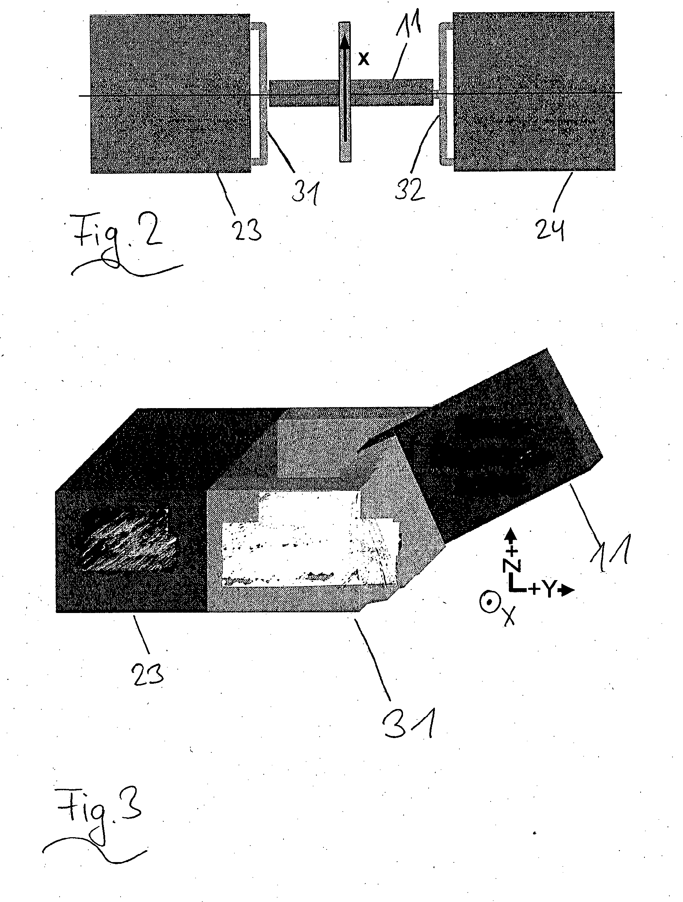

In Ausführungsbeispiel gemäß Fig. 2 ist Kopplungsbalken 11 so aufgehängt, dass er um die x-Achse rotatorisch auslenkbar ist. Dabei ist Kopplungsbalken 11 bezüglich seines Schwerund Symmetriepunkts aufgehängt und sein Schwerpunkt ist im Wesentlichen identisch mit dem des Drehratensensors. Hierdurch bleibt Kopplungsbalken 11 bzgl. seines Schwerpunktes beim Erfassen einer Drehrate im Wesentlichen in Ruhe. Seismische Massen 23 und 24 sind beispielgemäß direkt am Substrat aufgehängt. Die Federelemente 31 und 32 sind so ausgebildet und ausgelegt, dass sie eine gegenläufige Torsionsauslenkung jeweils zwischen den beiden seismischen Massen 23 und 24 und Kopplungsbalken 11 zulassen. Die Antriebsrichtung verläuft entlang der y-Richtung (entsprechend einem kartesischen Koordinatensystem).

In einem nicht dargestellten Beispiel gemäß Fig. 2 sind die seismischen Massen jeweils an einem Rahmen aufgehängt, welcher seinerseits jeweils mittels Federelementen am Substrat aufgehängt ist.

Beispielgemäße Federelemente 31 und 32 gemäß Fig. 2 sind in ihrer schematischen Ausbildung in Fig. 3 veranschaulicht. Dort ist Federelement 31 zwischen seismischer Masse 23 und Kopplungsbalken 11 in y- und z-Richtung ausgelenkt, weil Kopplungsbalken 11 eine Torsionsauslenkung um die x-Achse erfährt.

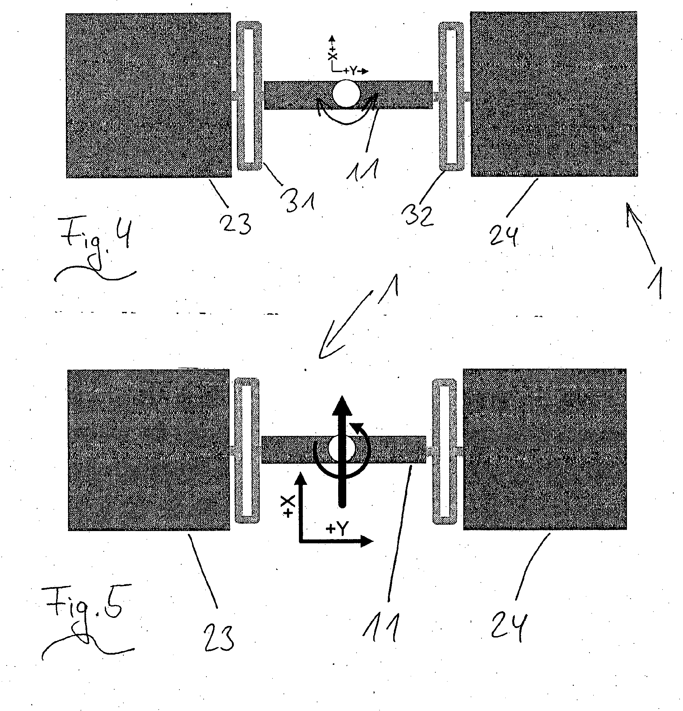

In Fig. 4 ist ein beispielhaftes Z-Gyro dargestellt, also ein Drehratensensor, welcher eine Drehrate um die z-Achse erfassen kann. Seismische Massen 23 und 24, welche beispielgemäß direkt am Substrat aufgehängt sind und in einem alternativen, nicht dargestellten Beispiel jeweils an einem Rahmen, welcher seinerseits jeweils am Substrat aufgehängt ist, sind über Kopplungsbalken 11, welcher mittels Federelementen 31 und 32 jeweils an die seismischen Massen angebunden ist, miteinander gekoppelt. Kopplungsbalken 11 ist so aufgehängt, dass er um die z-Achse rotatorisch auslenkbar ist, allerdings ist diese Aufhängung steif in x- und y-Richtung ausgelegt. Bei einer auf beide Massen gleichgerichtet einwirkenden Störung bzw. Störanregung wird eine unerwünschte, gleichgerichtete translatorische Auslenkung seismischer Massen 23 und 24 durch Kopplungsbalken 11 und dessen Aufhängung unterdrückt. Kopplungsbalken 11 lässt ausschließlich gegenphasige Auslenkung seismischer Massen 23 und 24 zu. Mit beispielgemäßer Ausbildung Drehratensensors 1 werden parasitäre Moden unterdrückt.

In einem nicht dargestellten Ausführungsbeispiel sind beide seismischen Massen an einem Rahmen aufgehängt, welcher seinerseits jeweils am Substrat aufgehängt ist.

Fig. 5 zeigt ein beispielhaftes X-Z-Gyro, also einen Drehratensensor, welcher Drehraten sowohl um die x- als auch um die z-Achse erfassen kann. Kopplungsbalken 11 dient der Unterdrückung unerwünschter Schwingungen und Auslenkungen in den Auslesemoden, wobei Kopplungsbalken 11 so aufgehängt ist, dass dieser um die x- und z-Achse rotatorisch auslenkbar ist. Beispielgemäß ist Kopplüngsbalken 11 über ein Federelement am Substrat aufgehängt, wobei die Aufhängung des Kopplungsbalkens im Wesentlichen an dessen Schwerpunkt angreift und dieser Schwerpunkt im Wesentlichen mit dem Schwerpunkt des gesamten Drehratensensors 1 übereinstimmt.

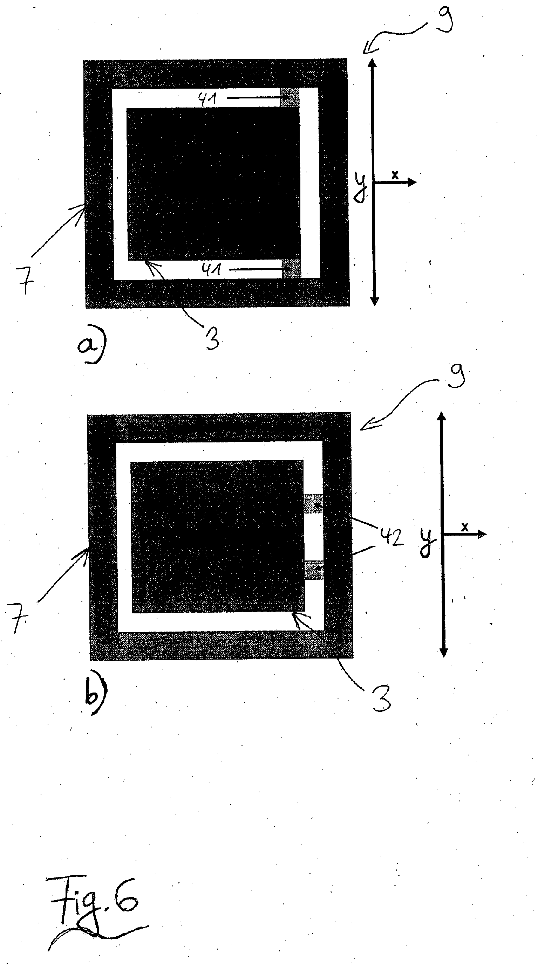

In Fig. 6 a) und b) sind beispielhafte Basiselemente 9 in der Draufsicht abgebildet. Diese bestehen jeweils aus einem geschlossenen Rahmen 7 und einer seismischen Masse 3, welche jeweils über Federelemente 41, 42 an Rahmen 7 aufgehängt sind. Der Antrieb erfolgt in y-Richtung. Bei dem in Fig. 6 a) abgebildeten Basiselement sind beide Federelemente 41 steif in x-, y- und z-Richtung ausgebildet und lassen lediglich eine Torsion um die y-Achse zu. Alternativ sind die beiden Federelemente 42 des in Fig. 6 b) abgebildeten Basis- elements 9 ausschließlich biegsam in z-Richtung ausgebildet und weisen sonst im Wesentlichen keine Freiheitsgrade auf.

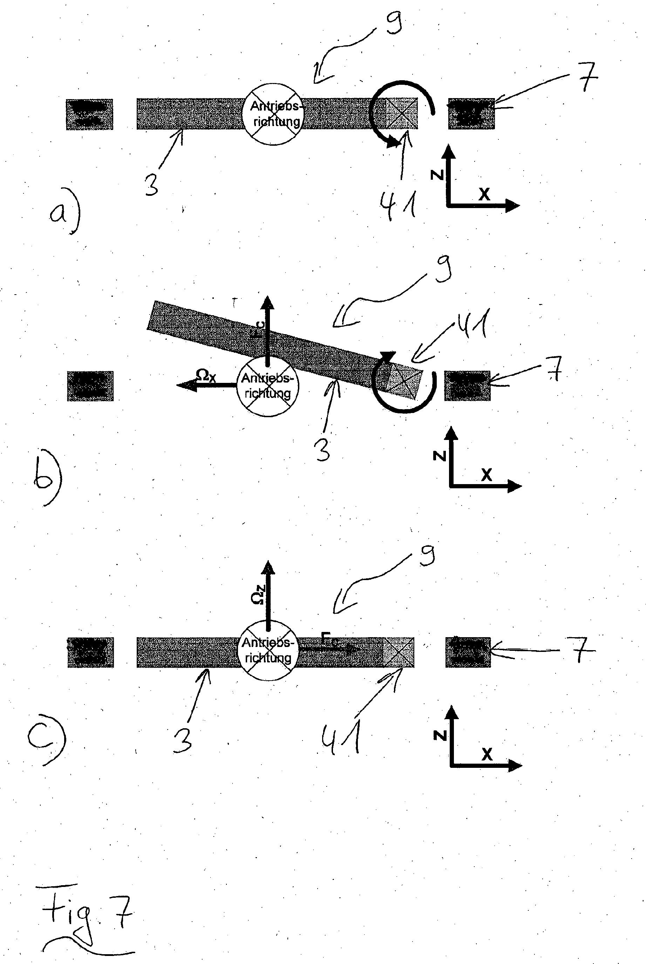

Fig. 7 a) zeigt den schematischen Querschnitt des beispielhaften Basiselements 9 gemäß Fig. 6 a). Seismische Masse 3 ist über Torsionsfederelement 41 an Rahmen 7 aufgehängt, wobei seismische Masse 3 eine Torsionsauslenkung um die yAchse ausführen kann. In Fig. 7 b) ist obiges Basiselement 9 bei Auftreten einer Drehrate um die x-Achse veranschaulicht. Die Drehrate um die x-Achse wird durch $\Omega_x$ in x-Richtung veranschaulicht. Aufgrund der Antriebsrichtung in y-Richtung und der Drehrate $\Omega_x$ um die x-Achse ergibt sich eine Corioliskraft $F_c$ in z-Richtung, welche Basiselement 3 in dargestellter Weise in z-Richtung auslenkt. Die Aufhängung Basiselements 3 durch Torsionsfeder 41 ermöglicht dabei eine Torsionsauslenkung um die y-Achse. In Fig. 7 c) wird ebenfalls bzgl. beispielhaftem, obigem Basiselements 9 das Auftreten einer Drehrate um die z-Achse dargestellt. Aufgrund dieser Drehrate $\Omega_z$ und der Antriebsrichtung in y-Richtung ergibt sich eine Corioliskraft $F_c$ in x-Richtung. Diese führt allerdings nicht zu einer Auslenkung seismischer Masse 3, weil $F_c$ in der Rahmenebene (x-y-Ebene) wirkt und Torsionsfederelemente 41 in x- und y-Richtung steif ausgebildet sind.

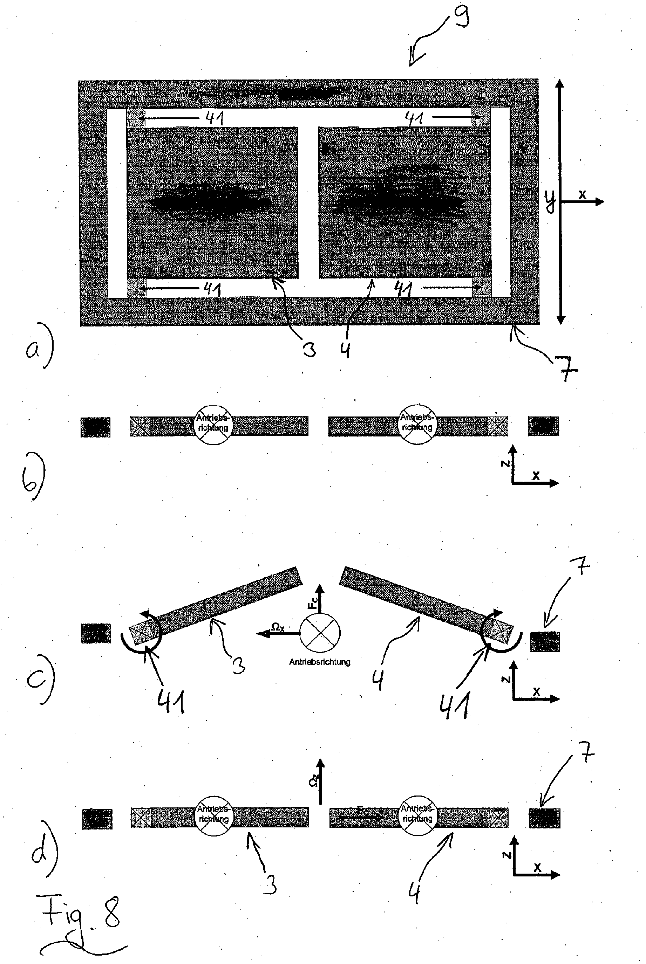

In Fig. 8 a) ist ein Ausführungsbeispiel eines Basiselements 9.in Draufsicht dargestellt, welches zwei seismische Massen 3 und 4 aufweist, die jeweils an zwei Torsionsfederelementen 41 an Rahmen 7 aufgehängt sind. Diese Torsionsfederelemente 41 sind so ausgebildet, dass sie im Wesentlichen ausschließlich Torsionsauslenkungen der seismischen Massen.3 und 4 um die y-Achse zulassen.

In einem nicht dargestellten alternativen Ausführungsbeispiel sind die seismischen Massen an Federelementen gemäß Fig. 6b) aufgehängt, welche im Wesentlichen ausschließlich eine Auslenkung in z-Richtung zulassen, also als Biegefedern ausgebildet sind.

Fig. 8 b) zeigt den schematischen Querschnitt des beispielhaften Basiselements gemäß Fig. 8 a) im unausgelenkten Zustand. Fig. 8 c) veranschaulicht die Auslenkung seismischer Massen 3 und 4 bei Auftreten einer Drehrate $\Omega_x$ um die x-Achse. Aufgrund der Antriebsrichtung (y-Richtung) und Drehrate $\Omega_x$ ergibt sich eine Corioliskraft $F_c$ in z-Richtung, welche eine Auslenkung beider seismischen Massen 3 und 4 in z-Richtung mit gleicher Orientierung hervorruft. Dabei tordieren Torsionsfederelemente 41, mit welchen seismische Massen 3 und 4 an Rahmen 7 aufgehängt sind, jeweils um die y-Achse. Fig. 8 d) veranschaulicht die Wirkung der Corioliskraft $F_c$ aufgrund einer Drehrate $\Omega_z$ um die z-Achse auf obiges, beispielgemäßes Basiselement. Aufgrund der Wirkungsrichtung der Corioliskraft in der x-y-Ebene, in welcher auch Rahmen 7 liegt, sowie der bezüglich dieser Richtungen steif ausgelegten Aufhängung, erfahren seismische Massen 3 und 4 keine Auslenkung.

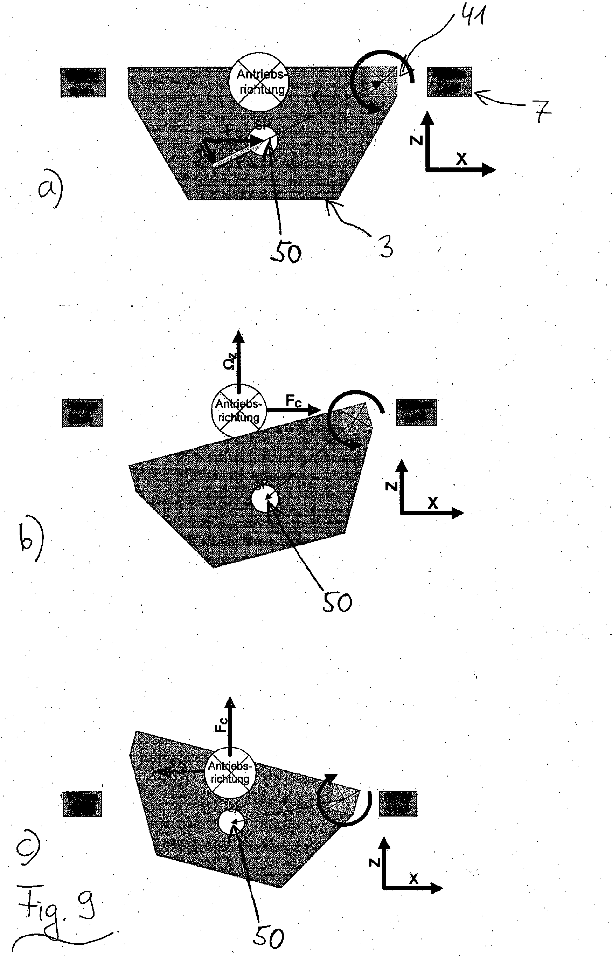

In Fig. 9 a) bis c) ist ein alternatives Ausführungsbeispiel eines Basiselements in einem schematischen Querschnitt dargestellt. Seismische Masse 3 ist dabei jeweils so ausgebildet, dass Schwerpunkt 50 seismischer Masse 3 in unausgelenktem Zustand außerhalb der durch den Rahmen aufgespannten Ebene beziehungsweise außerhalb des durch den Rahmenkörper aufgespannten Raums liegt. Beispielgemäß ist seismische Masse 3 so ausgebildet, dass Schwerpunkt 50 in z-Richtung unterhalb des Rahmenbereiches liegt. Seismische Masse 3 ist im Wesentlichen homogen aus einem Material ausgebildet, wobei untere Seite seismischer Masse 3 bällig ausgebildet ist und der Schwerpunkt 50 bezüglich der oberen flachen Seiten von einem Aufhängungspunkt um einen Winkel von im Wesentlichen 45° ausgelagert ist. Seismische Masse 3 ist mit zwei Torsionsfederelementen 41, welche eine Torsion um die y-Achse zulassen an Rahmen 7 einseitig aufgehängt. Fig. 9 a) veranschaulicht, dass eine Corioliskraft $F_c$, welche in x-Richtung wirkt, aufgrund des ausgelagerten Schwerpunktes seismischer Masse 3 ein Moment um die y-Achse erzeugt. Fig. 9 b) zeigt die Auslenkung seismischer Masse 3 in z-Richtung nach unten, hervorgerufen durch eine Drehrate $\Omega_z$ um die z-Achse. Aus dieser Drehrate $\Omega_z$ und der Antriebsrichtung in y-Richtung ergibt sich eine Corioliskraft $F_c$ in x-Richtung, welche gemäß Fig. 9 a) ein Moment um die y-Achse erzeugt. Fig. 9 c) stellt eine Auslenkung seismischer Masse 3 in z-Richtung nach oben dar, hervorgerufen durch eine Drehrate $\Omega_x$ um die x-Achse. Aufgrund dieser Drehrate und des Antriebs in y-Richtung ergibt sich eine Corioliskraft in z-Richtung, durch welche seismische Masse 3 ausgelenkt wird.

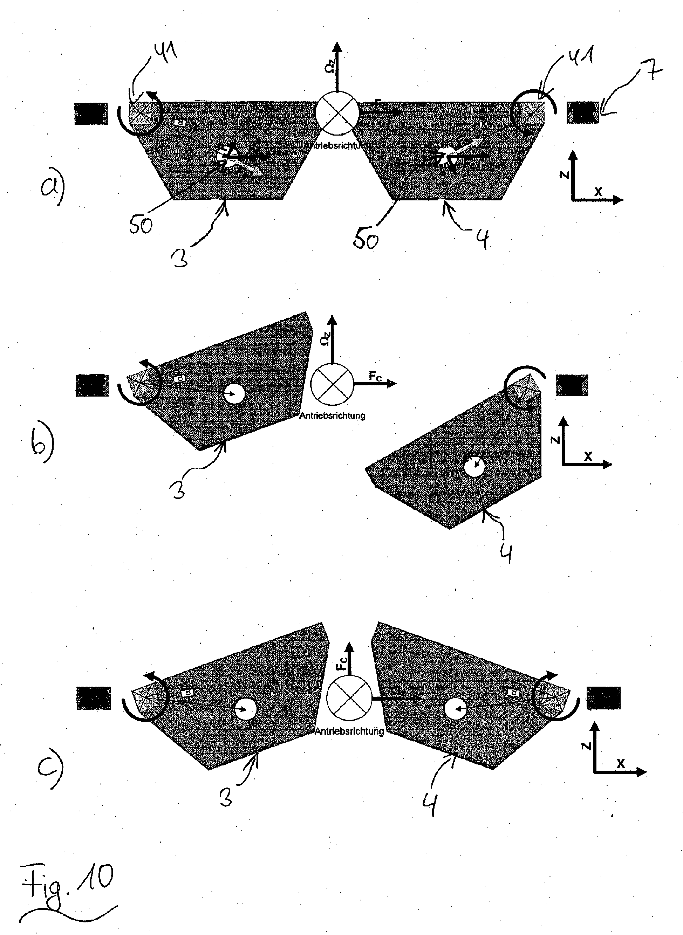

Fig. 10 a) bis c) zeigen ein beispielhaftes. Basiselement, welches zwei seismische Massen 3 und 4 aufweist, welche entsprechend der seismischen Masse 3 aus Fig. 9 ausgebildet sind, also eine ballige Seite aufweisen und einen bezüglich der Rahmenebene (x-y-Ebene) um 45° nach unten gedrehten, ausgelagerten Schwerpunkt aufweisen. Seismische Massen 3 und 4 sind jeweils an zwei Torsionsfederelementen 41 einseitig an der rechten und linke Seite Rahmens 7 aufgehängt. Dabei ist das Basiselement im unausgelenkten Zustand jeweils symmetrisch zu einer Ebene, mittig durch die Mitte zwischen Basiselementen 3 und 4 verlaufend und senkrecht zur durch den Rahmen aufgespannten Ebene (x-y-Ebene). Fig. 10 a) veranschaulicht die Kräfte, welche bei einer Drehrate $\Omega_z$ um die zAchse auftreten. Aufgrund des Antriebs seismischer Massen 3 und 4 in y-Richtung ergibt sich durch die Drehrate $\Omega_z$ Corioliskraft $F_c$ in x-Richtung. Dadurch, dass Schwerpunkt 50 jeweils um einen Aufhängungspunkt um einen Winkel von 45° bezüglich der Rahmenebene nach unten gedreht ausgelagert ist, ergibt sich eine Auslenkkraft $F_p$. Diese wirkt bei linker seismischer Masse 3 nach oben und bei rechter seismischer Masse 4 nach unten. Entsprechend werden seismische Massen 3 und 4 nach der in Fig. 10 b) dargestellten Weise invers zueinander orientiert ausgelenkt. Fig. 10 c) stellt die gleichgerichtete, also gleich orientierte, Auslenkung seismischer Massen 3 und 4 in z-Richtung nach oben, aufgrund des Auftretens einer Drehrate $\Omega_x$ um die x-Achse, dar. Diese Auslenkung kommt dadurch zustande, dass seismische Massen 3 und 4 in y-Richtung angetrieben werden, eine Drehrate $\Omega_x$ um die x-Achse auftritt und dadurch eine Corioliskraft $F_c$ in z-Richtung nach oben auf beide seimischen Massen wirkt.

Liegt die Torsionsachse, um welche der Massenschwerpunkt einer seismischen Masse ausgelenkt werden kann, parallel zur Antriebsachse und in der Substratebene, so werden Auslenkungen der seismischen Masse aufgrund des Antriebs bzw. in Abhängigkeit der Bewegung des Rahmens im Antriebsmode vermieden. Falls dies nicht der Fall ist und diese Torsionsachse senkrecht zur Antriebsachse ausgerichtet ist, dann wird die seismische Masse in der Äntriebsmode unerwünschterweise in z-Richtung ausgelenkt bzw. schwingt in z-Richtung.

In nicht dargestellten alternativen Ausführungsbeispielen zu Fig. 9 und 10 sind die seismischen Massen jeweils an in z-Richtung elastischen Biegefederelementen aufgehängt (Fig. 6b)).

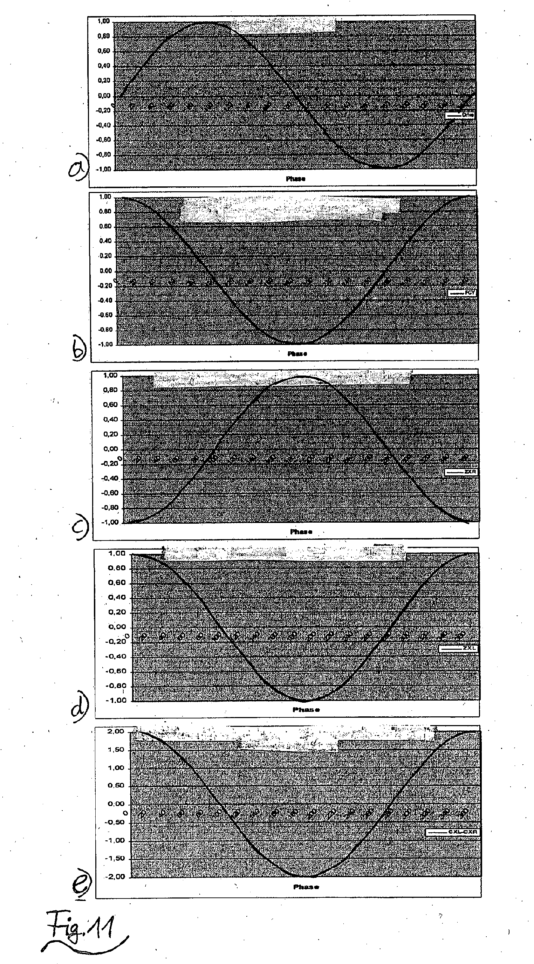

Fig. 11 zeigt verschiedene beispielhafte Signalverläufe bezüglich der Phase eines beispielhaften Basiselements gemäß Fig. 10 a) bei einer Drehrate um die z-Achse im eingeschwungenen Zustand. Fig. 11 a) stellt den phasenabhängigen Verlauf der Anregeamplitude, Fig. 11 b) den phasenabhängigen Verlauf der relativen Corioliskraft-Amplitude in x-Richtung, Fig. 11 c) die relative z-Amplitude (zum Ruhezustand) der rechten seismischen Masse, Fig. 11 d) die relative z-Amplitude (zum Ruhezustand) der linken seismischen Masse und Fig. 11 e) den phasenabhängigen Verlauf des relativen Kapazitätssignals, welches ein Differenzsignal auf dem Kapazitätssignal der linken und der rechten seismischen Masse ist, dar.

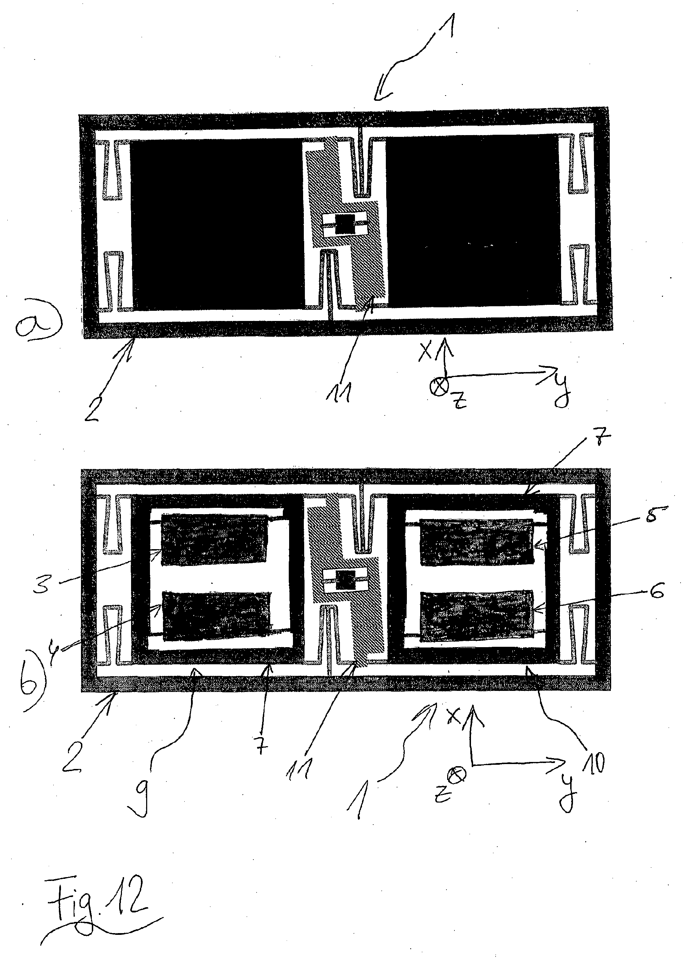

In Fig. 12 sind zwei Ausführungsbeispiele von Drehratensensoren 1 dargestellt, deren in der Antriebsmode in y-Richtung schwingende Massen über einen Kopplungsbalken 11, welcher über eine Torsionsfeder um die z-Achse tordierbar und in yRichtung steif am Substrat aufgehängt ist. Durch diese Aufhängung Kopplungsbalkens 11 werden parasitäre Moden der Antriebsmoden unterdrückt. In Fig. 12 a) sind seismische Massen 23 und 24 durch meanderförmige Federelemente in y-Richtung elastisch und in x-Richtung steif an Substrat 2 aufgehängt. Fig. 12 b) zeigt Basiselemente 9, 10, die jeweils durch meanderförmige Federelemente in y-Richtung elastisch und in x-Richtung steif an Substrat 2 aufgehängt sind, mit jeweils einem geschlossenen Rahmen 7, an welchem jeweils an welchem jeweils zwei seismische Massen 3,4,5,6 mittel Torsionsfedern aufgehängt sind. Diese Torsionsfedern sind steif in y- und x-Richtung und.sind tordierbar um die y-Achse, wodurch in den Auslesemoden seismische Massen 3,4,5,6 in z-Richtung auslenken.

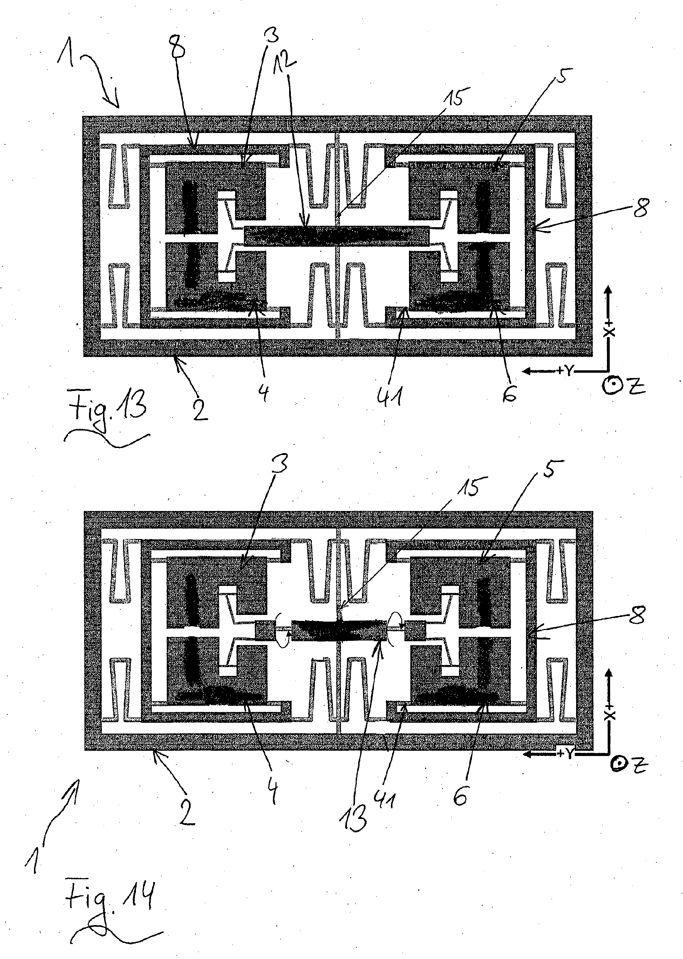

Fig. 13 zeigt einen beispielhaften X-Achsen-Drehratensensor 1, also einen Drehratensensor 1, welcher Drehraten um die x-Achse erfassen kann. Dieser weist zwei Basiselemente auf, welche jeweils über Federelemente an Substrat 2 aufgehängt sind. Diese Federelemente sind steif in x- und z- Richtung und elastisch in y-Richtung. Beide.Basiselemente werden durch nicht dargestellte Antriebsmittel zu gegenphasigen Schwingungen in y-Richtung angeregt. Beide Basiselemente weisen jeweils einen nicht vollständig geschlossenen Rahmen 8 auf, an welchem jeweils zwei seismische Massen 3,4 und 5,6 durch Torsionsfederelemente 41, welche im Wesentlichen lediglich Torsionsauslenkungen um die y-Achse zulassen, aufgehängt sind. Jeweils beide seismischen Massen 3,4 und 5,6 eines Basiselements sind über Federelemente an ein Ende Kopplungsbalkens 12 gekoppelt. Dieser ist in seinem Schwerpunkt an Torsionsfeder 15 aufgehängt, welche zwei Ankerpunkte an Substrat 2 aufweist. Torsionsfeder 15 ist steif in x- und z-Richtung und lässt Torsionen um die x- Achse zu. Durch diese Art der Aufhängung Kopplungsbalkens 12 werden parasitäre Moden der Auslesemoden unterdrückt, weil keine translatorischen Auslenkungen seismischer Massen 3,4 und 5,6 in Messrichtung (z-Richtung) durch derart aufgehängten Kopplungsbalken 12 zugelassen werden. Stattdessen werden Auslenkungen der seismischen Massen 3,4 und 5,6 durch die rotatorischen Auslenkungen Kopplungsbalkens 12 geführt. Beim Auftreten einer Drehrate um die x-Achse werden durch die resultierende Corioliskraft, welche in z-Richtung wirkt, jeweils beide seismischen Massen der beiden Basiselemente, bezüglich der Basiselemente mit inverser Orientierung, in z-Richtung ausgelenkt. Dabei werden die beiden seismischen Massen 3,4 des ersten Basiselements also beispielsweise in z-Richtung nach oben und die beiden seismischen Massen 5,6 des zweiten Basiselements in z-Richtung nach unten ausgelenkt. Beispielgemäß weist jede seismische Masse 3,4,5,6 eine Auswerteeinheit auf, welche die jeweilige Auslenkung in z-Richtung erfasst. Im Zuge der Drehratenmessung werden die Auswertesignale seismischer Massen 3,4 eines Basiselements von den Auswertesignalen seismischer Massen 5,6 des anderen Basiselements subtrahiert. Das sich daraus ergebende Differenzsignal ist das Messsignal, welche die Information über die Drehrate beinhaltet.

In Fig. 14 ist ein Ausführungsbeispiel eines Z-Achsen-Drehratensensors 1, also eines Drehratensensors 1, welcher Drehraten um die z-Achse erfassen kann, dargestellt. Dieser weist ebenfalls zwei Basiselemente mit jeweils einem offenen Rahmen 8 auf, der an Substrat 2 mittels meanderförmigen, in x- und z-Richtung steifen und in y-Richtung elastischen Federelementen aufgehängt ist. Jeweils ein nicht dargestelltes Antriebsmittel regt die Basiselemente zu gegenphasigen Schwingungen in y-Richtung an (Antriebsmode). Jedes Basiselement weist zwei seismische Massen 3,4 und 5,6 auf, welche jeweils an, um die y-Achse tordierbaren und zumindest in y-Richtung steifen Torsionsfederelementen 41 an Rahmen 8 aufgehängt sind. Basiselemente 3,4 und 5,6 sind an der unteren Seite ballig ausgebildet, so dass ihr jeweiliger Schwerpunkt in z-Richtung nach unten, außerhalb der durch den jeweiligen Rahmen aufgespannten Ebene bzw. des Raumquaders liegt. Solche Basiselemente sind beispielsweise in Fig. 9 und 10 veranschaulicht. Basiselemente 3,4 und 5,6 sind mittels Kopplungsbalken 13 miteinander gekoppelt. Kopplungsbalken 13 ist an Torsionsfederelement 15 mit Ankerpunkten an Substrat 2 aufgehängt, wobei diese Aufhängung Torsionen um die x-Achse erlaubt, aber keine Auslenkungen in x- und z-Richtung. Kopplungsbalken 13 weist ein mittleres Segment auf, in dessen Schwerpunkt Kopplungsbalken 13 an Torsionsfederelement 15 aufgehängt ist. An den Enden des mittleren Segments ist jeweils ein Randsegment mittels eines Torsionsfederelements angebracht, welches Torsionen um die y-Achse zulässt, aber steif in x-, y- und z-Richtung ausgebildet ist. Diese beiden Randsegmente Kopplungsbalkens 13 sind jeweils mit seismischen Massen 3,4 bzw. 5,6 eines Basiselements über Federelemente gekoppelt. Bei Erfassung einer Drehrate um die z-Achse ergibt sich unter Berücksichtigung der Antriebsrichtung (y-Richtung) eine Corioliskraft in x-Richtung auf seismische Massen 3,4 und 5,6. Aufgrund des ausgelagerten Schwerpunkts, welcher beispielgemäß jeweils bezüglich eines Aufhängungspünktes aus der Rahmenebene in z-Richtung nach unten um 45° gedreht ausgelagert ist, wirkt auf seismische Massen 3,4 und 5,6 jeweils eine Kraft, welche eine Komponente in z-Richtung aufweist. Hierdurch werden die seismischen Massen bezüglich der Basiselemente über Kreuz und jeweils pro Basiselement in z-Richtung invers orientiert zueinander ausgelenkt und schwingen dem entsprechend in den Auslesemoden. Anhand einer beispielhaften Momentaufnahme werden seismische Massen 3 und 6 in z-Richtung nach oben und seismische Massen 4 und 5 in z-Richtung nach unten ausgelenkt. Aus den Signalen der Ausleseeinrichtungen S3, S4, S5 und S6 jeder seismischen Masse 3,4 und 5,6 wird ein Gesamtsignal $\psi'$ gebildet, welches die Information bezüglich der Drehrate beinhaltet:

$$\psi' = (S3 - S4) - (S5 - S6).$$

Dieser beispielgemäße Z-Achsen-Drehratensensor 1 kann auch alternativ als X-Z-Achsen Drehratensensor, also zu Erfassung einer Drehrate um die x-Achse und einer Drehrate um die z-Achse, verwendet werden. Dabei wird das die Information über die Drehrate um die z-Achse beinhaltende Signal $\psi_z'$ wie oben beschrieben berechnet ($\psi_z' = (S3 - S4) - (S5 - S6)$). Das die Information über die Drehrate um die x-Achse beinhaltende Signal $\psi_x'$ ergibt sich dabei zu: $\psi_x' = (S3 + S4) - (S5 + S6)$.

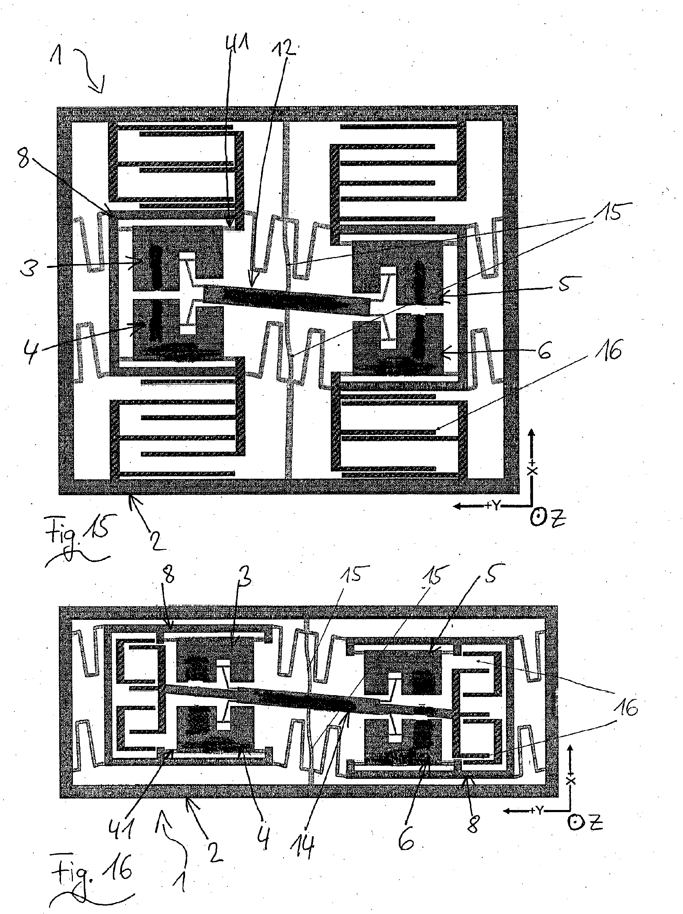

In Fig. 15 ist ein alternatives Ausführungsbeispiel eines X-Z-Achsen Drehratensensors 1 veranschaulicht. Dieser weist ebenfalls zwei Basiselemente auf, welche jeweils einen Rahmen 8 umfassen, der an Federelementen an Substrat 2 in z-Richtung steif und in x- und y-Richtung elastisch aufgehängt ist. Nicht dargestellte Antriebsmittel regen die Basiselemente zu gegenphasigen Antriebsmoden in y-Richtung an. Darüber hinaus weist Drehratensensor 1 vier Ausleseeinrichtungen 16 auf, welche Auslenkungen der Basiselemente in x-Richtung erfassen können und in x-Richtung auf beiden Seiten jeden Basiselements angeordnet sind. Dabei ist jeweils eine Kammstruktur der Ausleseeinrichtung 16 mit jeweiligem Rahmen 8 verbunden und eine andere mit Substrat 2. Jedes Basiselement weist zwei seismische Massen 3,4 und 5,6 auf, welche mittels Torsionsfederelementen 41, um die y-Achse tordierbar und bezüglich der drei Raumrichtungen steif, an den Rahmen 8 aufgehängt sind. Beispielgemäß sind diese seismischen Massen gemäß Fig. 6 und 7 ausgebildet. In einem nicht dargestellten alternativen Ausführungsbeispiel sind die seismischen Massen gemäß Fig. 10 ausgebildet. Seismische Massen 3,4 und 5,6 sind über Kopplungsbalken 15 mit einander gekoppelt. Kopplungsbalken 12 ist an Federelement 15 in seinem Schwerpunkt an Substrat 2 aufgehängt. Diese Aufhängung, entsprechend der Ausbildung und Einspannung Federelements 15, erlaubt Kopplungsbalken 12 Torsionen um die x-Achse und die z-Achse und unterbindet Auslenkungen in x- und z-Richtung. Eine Drehrate um die x-Achse ruft eine Corioliskraft hervor, welche in z-Richtung wirkt und entsprechend die seismischen Massen in die Richtung auslenkt und bzgl. der Basiselemente gegenphasig zueinander schwingen lässt. Beispielgemäß werden dabei seismische Massen 3,4 in z-Richtung nach oben und seismische Massen 5,6 in z-Richtung nach unten ausgelenkt, wobei der zeitliche Verlauf dieser Auslenkungen von nicht dargestellten Ausleseeinrichtungen erfasst wird. Eine Drehrate um die z-Achse ruft hingegen eine Corioliskraft in x-Richtung hervor. Diese bewirkt gegenphasige Auslenkungen und Moden der Basiselemente samt seismischen Massen 3,4 und 5,6 in x-Richtung, welche von Ausleseeinrichtungen 16 erfasst werden. Die Drehrate um die z-Achse ergibt sich dabei aus dem Differenzsignal der den Basiselementen zugeordneten Ausleseeinrichtungen 16. Die Drehrate um die x-Achse hingegen ergibt sich aus dem Differenzsignal der Auslenkung seismischer Massen 3,4 eines Basiselements und der Auslenkung seismischer Massen 5,6 des anderen Basiselements.

Der in Fig. 16 gezeigte Drehratensensor 1 ist ebenfalls ein X-Z-Achsen Drehratensensor. Er entspricht weitgehend dem in Fig. 15 beschriebenen. Allerdings sind Ausleseeinrichtungen 16 nun an anderer Stelle, unzwar in Verlängerung des Kopplungsbalkens 14, vom Zentrum Drehratensensors 1 aus, in y-Richtung jeweils hinter den seismischen Massen angeordnet. Dabei sind diese Ausleseeinrichtungen beidseitig mit jeweils einer Kammstruktur fest mit dem verlängerten Ende Kopplungsbalkens 14 verbunden und mit der anderen Kammstruktur jeweils mit Substrat 2. Diese Ausleseeinrichtungen erfassen entsprechend die in Fig. 15 beschrieben Auslenkungen in x-Richtung, hervorgerufen durch eine Corioliskraft aufgrund einer Drehrate um die z-Achse.

## Patentansprüche

1. Drehratensensor (1) umfassend zumindest ein Substrat (2), wobei die Grundfläche des Substrats (2) parallel zur x-y-Ebene eines kartesischen Koordinatensystems ausgerichtet ist, mindestens zwei Basiselemente (9,10), welche jeweils einen Rahmen (7,8), eine Aufhängung des Rahmens am Substrat, zumindest eine seismische Masse (3,4,5,6) und eine Aufhängung (41,42) der seismischen Masse am Rahmen (7,8) aufweisen, mit einem oder mehreren Antriebsmitteln zum Antreiben eines oder mehrerer Basiselemente und einer oder mehreren Ausleseeinrichtungen (16), wobei die zumindest zwei Basiselemente (9,10) durch mindestens einen Kopplungsbalken (11,12,13,14) miteinander gekoppelt sind, wobei der Kopplungsbalken so ausgelegt ist, dass er unerwünschte Schwingungen und Auslenkungen bezüglich zumindest einer Auslesemode unterdrückt, wobei der Kopplungsbalken (11,12,13,14) an zumindest einem Federelement (15) aufgehängt ist, wobei das Federelement (15) so ausgebildet und eingespannt und/oder befestigt ist, dass es translatorische Auslenkungen des Kopplungsbalkens (11,12,13,14) verhindert, **dadurch gekennzeichnet, dass** das zumindest eine Federelement (15), an welchem der Kopplungsbalken (11,12,13,14) aufgehängt ist, eine Torsionsfeder ist, welche eine rotatorische Auslenkung des Kopplungsbalkens um x-Achse oder um die x-Achse und die z-Achse ermöglicht.

2. Drehratensensor (1) nach Anspruch 1, **dadurch gekennzeichnet, dass** das mindestens eine Antriebsmittel auf mindestens einen Rahmen (7,8) und/oder eine seismische Masse (3,4,5,6) mindestens eines Basiselements einwirkt.

3. Drehratensensor (1) nach Anspruch 1 oder 2, **dadurch gekennzeichnet, dass** das mindestens eine Antriebsmittel die mindestens zwei Basiselemente (9,10) in y-Richtung antreibt und der Drehratensensor (1) so ausgelegt ist, dass er Drehraten um die x-Achse und/oder z-Achse erfassen kann.

4. Drehratensensor (1) nach mindestens einem der Ansprüche 1 bis 3, **dadurch gekennzeichnet, dass** das zumindest einem Federelement (15) am Substrat (2) eingespannt ist und mit diesem mindestens einen Ankerpunkt bildet.

5. Drehratensensor (1) nach mindestens einem der Ansprüche 1 oder 4, **dadurch gekennzeichnet, dass** der Kopplungsbalken (11,12,13,14) im Wesentlichen im Bereich seines Schwerpunkts an dem zumindest einen Federelement (15) aufgehängt ist.

6. Drehratensensor (1) nach mindestens einem der Ansprüche 1 bis 5, **dadurch gekennzeichnet, dass** der Schwerpunkt des Kopplungsbalkens (11,12,13,14) im Wesentlichen mit dem Schwerpunkt des Drehratensensors (1), insbesondere jeweils bezogen auf die x-y-Ebene, zusammenfällt.

7. Drehratensensor (1) nach mindestens einem der Ansprüche 1 bis 6, **dadurch gekennzeichnet, dass** der Kopplungsbalken (11,12,13,14) an beiden Enden jeweils mit einer oder mehreren seismischen Masse/n (3,4,5,6) und/oder einer oder mehreren Ausleseeinrichtung/en (16) und/oder einem oder mehreren Rahmen (7,8) direkt oder über ein oder mehrere Federelement/e gekoppelt ist.

8. Drehratensensor (1) nach mindestens einem der Ansprüche 1 bis 7, **dadurch gekennzeichnet, dass** die seismischen Massen (3,4,5,6) jeweils um eine Torsionsachse auslenkbar aufgehängt sind und diese Torsionsachse im Wesentlichen parallel zur Antriebsrichtung verläuft.

9. Drehratensensor (1) nach mindestens einem der Ansprüche 1 bis 8, **dadurch gekennzeichnet, dass** mindestens zwei seiner seismischen Massen (3,4,5,6) einen Schwerpunkt (50) aufweisen, welcher in z-Richtung außerhalb der durch den jeweiligen Rahmen aufgespannten Ebene und/oder des Raumquaders liegt.

10. Drehratensensor (1) nach mindestens einem der Ansprüche 1 bis 9, **dadurch gekennzeichnet, dass** jeder der seismischen Massen (3,4,5,6) eine Ausleseeinrichtung zugeordnet ist.

11. Drehratensensor (1) nach mindestens einem der Ansprüche 1 bis 10, **dadurch gekennzeichnet, dass** im Wesentlichen aus dem Differenzsignal der Ausleseeinrichtungen, welche jeweils den einzelnen seismischen Massen (3,4) eines Basiselements (9) zugeordnet sind, und dem Differenzsignal der Ausleseeinrichtungen (16), welche unterschiedlichen Basiselementen zugeordnet sind, die erfasste Drehrate bestimmbar ist.

12. Drehratensensor (1) nach mindestens einem der Ansprüche 1 bis 11, welcher eine Drehrate um die x-Achse erfassen kann, **dadurch gekennzeichnet, dass** der Antrieb der Basiselemente (9,10) in y-Richtung erfolgt, wobei

  - die Rahmen (7,8) der Basiselemente jeweils durch Federelemente am Substrat aufgehängt sind, welche im Wesentlichen steif in x-Richtung und z-Richtung und elastisch in y-Richtung sind,
  - die seismischen Massen (3,4,5,6) jedes Basiselements mittels Federelementen (41), welche im Wesentlichen eine Torsion um die y-Achse zulassen und/oder elastisch in z-Richtung sind, am jeweiligen Rahmen (7,8) aufgehängt sind, und
  - der Kopplungsbalken (12) mittels einer Torsionsfeder (15), welche Torsionen um die x-Achse zulässt und steif in x- und z-Richtung ist, am Substrat (2) aufgehängt ist und an jedem seiner beiden Enden mittels Federelementen mit den seismischen Massen (3,4,5,6) jeweils eines Basiselements gekoppelt ist.

13. Drehratensensor (1) nach mindestens einem der Ansprüche 1 bis 11, welcher eine Drehrate um die x-Achse und die z-Achse erfassen kann, **dadurch gekennzeichnet, dass** der Antrieb der Basiselemente in y-Richtung erfolgt, wobei

  - die Rahmen (7,8) der Basiselemente jeweils durch Federelemente am Substrat aufgehängt sind, welche im Wesentlichen steif in x- und z-Richtung und elastisch in y-Richtung sind,
  - die seismischen Massen (3,4,5,6), welche jeweils einen Schwerpunkt (50) aufweisen, welcher in z-Richtung außerhalb der durch den jeweiligen Rahmen aufgespannten Ebene und/oder des Raumquaders liegt, jedes Basiselements mittels Federelementen (41), welche im Wesentlichen eine Torsion um die y-Achse zulassen und/oder elastisch in z-Richtung sind, am jeweiligen Rahmen (7,8) aufgehängt sind, und
  - der Kopplungsbalken (13) mittels einer Torsionsfeder (15), welche eine Torsion um die x-Achse zulässt und steif in x- und z-Richtung ist, am Substrat (2) aufgehängt ist und an seinen beiden Enden jeweils ein separater Teil des Kopplungsbalkens mit dem Mittelstück des Kopplungsbalkens mittels einer Torsionsfeder gekoppelt ist, welche im Wesentlichen steif in x-, y- und z-Richtung ist und Torsionen um die y-Achse zulässt, wobei diese beiden äußeren, separaten Teile des Kopplungsbalkens jeweils mittels Federelementen mit den seismischen Massen (3,4,5,6) jeweils eines Basiselements gekoppelt sind.

14. Drehratensensor (1) nach mindestens einem der Ansprüche 1 bis 11, welcher eine Drehrate um die x-Achse und die z-Achse erfassen kann, **dadurch gekennzeichnet, dass** der Antrieb der Basiselemente in y-Richtung erfolgt, wobei

  - die Rahmen (7,8) der Basiselemente jeweils durch Federelemente, welche im Wesentlichen steif in z-Richtung und elastisch in y- und x-Richtung sind, am Substrat (2) aufgehängt sind,
  - die seismischen Massen (3,4,5,6) jedes Basiselements mittels Federelementen (41), welche im Wesentlichen eine Torsion um die y-Achse zulassen und/oder elastisch in z-Richtung sind, am jeweiligen Rahmen (7,8) aufgehängt sind, und
  - der Kopplungsbalken (12,14) mittels einer Torsionsfeder (15), welche Torsionen um die x-Achse und die z-Achse zulässt und steif in x- und z-Richtung ist, am Substrat (2) aufgehängt ist und an jedem seiner beiden Enden mittels Federelementen mit den seismischen Massen (3,4,5,6) jeweils eines Basiselements gekoppelt ist.

15. Drehratensensor nach mindestens einem der Ansprüche 1 bis 14, **dadurch gekennzeichnet, dass** dieser als ein Mikro-Elektro-Mechanisches-System (MEMS) oder MEMS-Modul ausgebildet ist, welches insbesondere mechanische und elektronische Mittel zum Anschluss und/oder Zusammenwirken an/mit weiteren MEMS-Modulen und/oder mit mindestens einer elektronischen Signalverarbeitungsschaltung aufweist.

16. Verfahren zur Herstellung eines Drehratensensors (1), wobei mittels eines Herstellungsprozesses zur Herstellung mikromechanischer Systeme aus einem Substrat, welches insbesondere aus kristallinem Silizium oder mehreren Schichten Halbleitermaterials und/oder Metall/en besteht, mikromechanische Elemente ausgebildet werden, **dadurch gekennzeichnet, dass** dabei zumindest in Teilen ein Drehratensensor (1) gemäß mindestens einem der Ansprüche 1 bis 15 ausgebildet wird.

17. Verwendung des Drehratensensors gemäß mindestens einem der Ansprüche 1 bis 15 in Kraftfahrzeugen, insbesondere in einem Kraftfahrzeugregelungssystem.

## Claims

1. Rotational speed sensor (1) comprising at least one substrate (2), **characterized in that** the base area of the substrate (2) is oriented parallel to the x-y plane of a Cartesian coordinate system, at least two base elements (9, 10) which each have a frame (7, 8), a means for suspending the frame from the substrate, at least one seismic mass (3, 4, 5, 6) and one means (41, 42) for suspending the seismic mass from the frame (7, 8), having one or more drive means for driving one or more base elements and one or more reading devices (16), wherein the at least two base elements (9, 10) are coupled to one another by means of at least one coupling bar (11, 12, 13, 14), wherein the coupling bar is configured in such a way that it suppresses undesired oscillations and deflections with respect to the at least one reading mode, wherein the coupling bar (11, 12, 13, 14) is suspended from at least one spring element (15), wherein the spring element (15) is embodied and clamped in and/or attached in such a way that it prevents translatory deflections of the coupling bar (11, 12, 13, 14), **characterized in that** the at least one spring element (15) from which the coupling bar (11, 12, 13, 14) is suspended is a torsion spring which permits a rotational deflection of the coupling bar about the x axis or about the x axis and the z axis.

2. Rotational speed sensor (1) according to Claim 1, **characterized in that** the at least one drive means acts on at least one frame (7, 8) and/or a seismic mass (3, 4, 5, 6) of at least one base element.

3. Rotational speed sensor (1) according to Claim 1 or 2, **characterized in that** the at least one drive means drives the at least two base elements (9, 10) in the y direction, and the rotational speed sensor (1) is configured in such a way that it can sense rotational speeds about the x axis and/or z axis.

4. Rotational speed sensor (1) according to at least one of Claims 1 to 3, **characterized in that** the at least one spring element (15) is clamped to the substrate (2) and forms at least one anchoring point with the latter.

5. Rotational speed sensor (1) according to at least one of Claims 1 to 4, **characterized in that** the coupling bar (11, 12, 13, 14) is suspended, essentially in the region of its center of gravity, from the at least one spring element (15).

6. Rotational speed sensor (1) according to at least one of Claims 1 to 5, **characterized in that** the center of gravity of the coupling bar (11, 12, 13, 14) coincides essentially with the center of gravity of the rotational speed sensor (1), in particular in each case with respect to the x-y plane.

7. Rotational speed sensor (1) according to at least one of Claims 1 to 6, **characterized in that** the coupling bar (11, 12, 13, 14) is coupled at each of its two ends to one or more seismic masses (3, 4, 5, 6) and/or one or more reading devices (16) and/or one or more frames (7, 8), directly or by means of one or more spring elements.

8. Rotational speed sensor (1) according to at least one of Claims 1 to 7, **characterized in that** the seismic masses (3, 4, 5, 6) are each suspended so as to be deflectable about a torsion axis, and this torsion axis extends essentially parallel to the driving direction.

9. Rotational speed sensor (1) according to at least one of Claims 1 to 8, **characterized in that** at least two of its seismic masses (3, 4, 5, 6) have a center of gravity (50) which lies in the z direction outside the plane extending through the respective frame and/or outside the right parallelepiped.

10. Rotational speed sensor (1) according to at least one of Claims 1 to 9, **characterized in that** each of the seismic masses (3, 4, 5, 6) is assigned a reading device.

11. Rotational speed sensor (1) according to at least one of Claims 1 to 10, **characterized in that** the sensed rotational speed can be determined essentially from the difference signal of the reading devices which are each assigned to the individual seismic masses (3, 4) of a base element (9), and from the difference signal of the reading devices (16) which are assigned to different base elements.

12. Rotational speed sensor (1) according to at least one of Claims 1 to 11, which rotational speed sensor (1) can sense a rotational speed about the x axis, **characterized in that** the base elements (9, 10) are driven in the y direction, wherein

    - the frames (7, 8) of the base elements are each suspended from the substrate by means of spring elements which are essentially rigid in the x direction and z direction and elastic in the y direction,
    - the seismic masses (3, 4, 5, 6) of each base element are suspended from the respective frame (7, 8) by means of spring elements (41) which essentially permit torsion about the y axis and/or are elastic in the z direction, and
    - the coupling bar (12) is suspended from the substrate (2) by means of a torsion spring (15) which permits torsion about the x axis and is rigid in the x and y directions and is coupled at each of its two ends to the seismic masses (3, 4, 5, 6) of, in each case, one base element by means of spring elements.

13. Rotational speed sensor (1) according to at least one of Claims 1 to 11, which rotational speed sensor (1) can sense a rotational speed about the x axis and the z axis, **characterized in that** the base elements are driven in the y direction, wherein

- the frames (7, 8) of the base elements are each suspended from the substrate by means of spring elements which are essentially rigid in the x and z directions and elastic in the y direction,
- the seismic masses (3, 4, 5, 6) which each have a center of gravity (50) which lies in the z direction outside the plane extending through the respective frame and/or outside the right parallelepiped, of each base element are suspended from the respective frame (7, 8) by means of spring elements (41) which essentially permit torsion about the y axis and/or are elastic in the z direction, and
- the coupling bar (13) is suspended from the substrate (2) by means of a torsion spring (15) which permits torsion about the x axis and is rigid in the x and z directions, and at each of its two ends a separate part of the coupling bar is coupled to the central piece of the coupling bar by means of a torsion spring which is essentially rigid in the x, y and z directions and permits torsion about the y axis, wherein these two outer separate parts of the coupling bar are each coupled to the seismic masses (3, 4, 5, 6) of, in each case, one base element by means of spring elements.

14. Rotational speed sensor (1) according to at least one of Claims 1 to 11, which can sense a rotational speed about the x axis and the z axis, **characterized in that** the base elements are driven in the y direction, wherein

- the frames (7, 8) of the base elements are each suspended from the substrate (2) by means of spring elements which are essentially rigid in the z direction and elastic in the y and x directions,
- the seismic masses (3, 4, 5, 6) of each base element are suspended from the respective frame (7, 8) by means of spring elements (41) which essentially permit torsion about the y axis and/or are elastic in the z direction, and
- the coupling bar (12, 14) is suspended from the substrate (2) by means of a torsion spring (15) which permits torsion about the x axis and the z axis and is rigid in the x and z directions, and is coupled at each of its two ends to the seismic masses (3, 4, 5, 6) of, in each case, one base element by means of spring elements.

15. Rotational speed sensor according to at least one of Claims 1 to 14, **characterized in that** said rotational speed sensor is embodied as a micro-electric mechanical system (MEMS) or MEMS module which has, in particular, mechanical and electronic means for connecting to and/or interacting with further MEMS modules and/or with at least one electronic signal processing circuit.

16. Method for manufacturing a rotational speed sensor (1), wherein micromechanical elements are formed by means of a manufacturing process for manufacturing micromechanical systems from a substrate which is composed, in particular, of crystalline silicon or a plurality of layers of semiconductor material and/or metal or metals, **characterized in that** in this context a rotational speed sensor (1) according to at least one of Claims 1 to 15 is formed at least in parts.

17. Use of the rotational speed sensor according to at least one of Claims 1 to 15 in motor vehicles, in particular in a motor vehicle control system.

## Revendications

1. Capteur (1) de vitesse de rotation comprenant au moins un substrat (2), la surface de base du substrat (2) étant orientée parallèlement au plan x-y d'un système de coordonnées cartésiennes,
au moins deux éléments de base (9, 10) qui présentent chacun un bâti (7, 8), une suspension du bâti sur le substrat, au moins une masse sismique (3, 4, 5, 6) et une suspension (41, 42) des masses sismiques sur le bâti (7, 8),
un ou plusieurs moyens d'entraînement qui entraînent un ou plusieurs éléments de base et un ou plusieurs dispositifs de lecture (16),
les deux ou plusieurs éléments de base (9, 10) étant raccordés l'un à l'autre par au moins une barre d'accouplement (11, 12, 13, 14), la barre d'accouplement étant conçue de manière à réduire des oscillations et des déformations indésirables dans au moins un mode de lecture,
la barre d'accouplement (11, 12, 13, 14) étant suspendue à au moins un élément élastique (15), l'élément élastique (15) étant configuré et serré et/ou fixé de manière à empêcher des déformations de translation de la barre d'accouplement (11, 12, 13, 14), **caractérisé en ce que**
le ou les éléments élastiques (15) sur lequel la barre d'accouplement (11, 12, 13, 14) est suspendue est un ressort de torsion qui permet une déformation de rotation de la barre d'accouplement autour de l'axe x ou autour de l'axe x et de l'axe z.

2. Capteur (1) de vitesse de rotation selon la revendication 1, **caractérisé en ce que** le ou les moyens d'entraînement agissent sur au moins un bâti (7, 8) et/ou sur une masse sismique (3, 4, 5, 6) d'au moins un élément de base.

3. Capteur (1) de vitesse de rotation selon les revendications 1 ou 2, **caractérisé en ce que** le ou les moyens d'entraînement entraînent les deux ou plusieurs éléments de base (9, 10) dans la direction y et **en ce que** le capteur (1) de vitesse de rotation est conçu pour pouvoir détecter des vitesses de rotation autour de l'axe x et/ou de l'axe z.

4. Capteur (1) de vitesse de rotation selon au moins l'une des revendications 1 à 3, **caractérisé en ce que** le ou les éléments élastiques (15) sont serrés sur le substrat (2) et forment avec ce dernier au moins un point d'ancrage.

5. Capteur (1) de vitesse de rotation selon au moins l'une des revendications 1 ou 4, **caractérisé en ce que** la barre d'accouplement (11, 12, 13, 14) est suspendue essentiellement au niveau de son centre de masse sur le ou les éléments élastiques (15).

6. Capteur (1) de vitesse de rotation selon au moins l'une des revendications 1 à 5, **caractérisé en ce que** le centre de masse de la barre d'accouplement (11, 12, 13, 14) coïncide essentiellement avec le centre de masse du capteur (1) de vitesse de rotation, en particulier par rapport au plan x-y.

7. Capteur (1) de vitesse de rotation selon au moins l'une des revendications 1 à 6, **caractérisé en ce que** la barre d'accouplement (11, 12, 13, 14) est couplée à ses deux extrémités, directement ou par l'intermédiaire d'un ou plusieurs éléments élastiques, à une ou plusieurs masses sismiques (3, 4, 5, 6) et/ou à un ou plusieurs dispositifs de lecture (16) et/ou à un ou plusieurs bâtis (7, 8).

8. Capteur (1) de vitesse de rotation selon au moins l'une des revendications 1 à 7, **caractérisé en ce que** les masses sismiques (3, 4, 5, 6) sont chacune suspendues de manière à pouvoir se déplacer autour d'un axe de torsion et **en ce que** cet axe de torsion s'étend essentiellement en parallèle à la direction d'entraînement.

9. Capteur (1) de vitesse de rotation selon au moins l'une des revendications 1 à 8, **caractérisé en ce qu'**au moins deux de ces masses sismiques (3, 4, 5, 6) présentent un centre de masse (50) qui est situé dans la direction z à l'extérieur du plan et/ou du parallélépipède spatial sous-tendu par le bâti concerné.

10. Capteur (1) de vitesse de rotation selon au moins l'une des revendications 1 à 9, **caractérisé en ce qu'**un dispositif de lecture est associé à chacune des masses sismiques (3, 4, 5, 6).

11. Capteur (1) de vitesse de rotation selon au moins l'une des revendications 1 à 10, **caractérisé en ce que** la vitesse de rotation saisie peut être déterminée à partir du signal de différence des dispositifs de lecture qui sont associés respectivement aux différentes masses sismiques (3, 4) d'un élément de base (9) et du signal de différence des dispositifs de lecture (16) associés à différents éléments de base.

12. Capteur (1) de vitesse de rotation selon au moins l'une des revendications 1 à 11, capable de saisir une vitesse de rotation autour de l'axe x, **caractérisé en ce que** l'entraînement des éléments de base (9, 10) s'effectue dans la direction y,
en ce que les bâtis (7, 8) des éléments de base sont chacun suspendus sur le substrat par des éléments élastiques qui sont essentiellement rigides dans la direction x et la direction z et élastiques dans la direction y,
en ce que les masses sismiques (3, 4, 5, 6) de chaque élément de base sont suspendues sur le bâti respectif (7, 8) au moyen d'éléments élastiques (41) qui permettent essentiellement une torsion autour de l'axe y et/ou élastique dans la direction z et
en ce que la barre d'accouplement (12) est suspendue sur le substrat (2) au moyen d'un ressort de torsion (15) qui permet des torsions autour de l'axe x et qui est rigide dans la direction x et la direction z, et est couplé à chacune de ses deux extrémités à la masse sismique (3, 4, 5, 6) de chaque élément de base au moyen d'éléments élastiques.

13. Capteur (1) de vitesse de rotation selon au moins l'une des revendications 1 à 11, qui permet de saisir une vitesse de rotation autour de l'axe x et autour de l'axe z, **caractérisé en ce que** l'entraînement des éléments de base s'effectue dans la direction y,
en ce que les bâtis (7, 8) des éléments de base sont chacun suspendus sur le substrat par des éléments élastiques qui sont essentiellement rigides dans la direction x et la direction z et élastiques dans la direction y,
en ce que les masses sismiques (3, 4, 5, 6) qui présentent chacune un centre de masse (50) situé dans la direction z à l'extérieur du plan suspendu par le bâti concerné et/ou du parallélépipède spatial de chaque élément de base au moyen d'éléments élastiques (41) qui permettent essentiellement une torsion autour de l'axe y et/ou sont élastiques dans la direction z, sur chaque bâti (7, 8) et
en ce que la barre d'accouplement (13) est suspendue sur le substrat (2) au moyen d'un ressort de torsion (15) qui permet une torsion autour de l'axe x et qui est rigide dans la direction x et dans la direction z, une partie séparée de la barre d'accouplement étant couplée à chacune de ses extrémités à la pièce centrale de la barre d'accouplement au moyen d'un ressort de torsion qui est essentiellement rigide dans la direction x, la direction y et la direction z et qui permet des torsions de l'axe y, ces deux parties séparées extérieures de la barre d'accouplement étant accouplées chacune au moyen d'éléments élastiques aux masses sismiques (3, 4, 5, 6) de chaque élément de base.

**14.** Capteur (1) de vitesse de rotation selon au moins l'une des revendications 1 à 11, qui permet de saisir une vitesse de rotation autour de l'axe x et de l'axe z, **caractérisé en ce que** l'entraînement des éléments de base s'effectue dans la direction y,
**en ce que** les bâtis (7, 8) des éléments de base sont chacun suspendus par des éléments élastiques essentiellement rigides dans la direction z et élastiques dans la direction y et la direction x sur le substrat (2),
**en ce que** les masses sismiques (3, 4, 5, 6) de chaque élément de base sont suspendues sur le bâti concerné (7, 8) au moyen d'éléments élastiques (41) qui permettent essentiellement une torsion autour de l'axe y et/ou qui sont élastiques dans la direction z et
**en ce que** la barre d'accouplement (12, 14) est suspendue sur le substrat (2) au moyen d'un ressort de torsion (15) qui permet des torsions autour de l'axe x et de l'axe z et qui est rigide dans la direction x et la direction z, et **en ce qu'**à chacune de ses deux extrémités, elle est accouplée aux masses sismiques (3, 4, 5, 6) d'un élément de base au moyen d'éléments élastiques.

**15.** Capteur (1) de vitesse de rotation selon au moins l'une des revendications 1 à 14, **caractérisé en ce qu'**il est configuré comme système MEMS (microélectromécanique) ou module MEMS qui présente en particulier des moyens mécaniques et électroniques de raccordement et/ou de coopération sur ou avec d'autres modules MEMS et/ou avec au moins un circuit électronique de traitement de signaux.

**16.** Procédé de fabrication d'un capteur (1) de vitesse de rotation, par lequel des éléments micromécaniques sont formés au moyen d'une opération de fabrication de systèmes micromécaniques à partir d'un substrat qui est constitué en particulier de silicium cristallin ou de plusieurs couches de matériau semi-conducteur et/ou de métaux,
**caractérisé en ce que**
un capteur (1) de vitesse de rotation selon au moins l'une des revendications 1 à 15 y est formé dans au moins certaines de ses parties.

**17.** Utilisation du capteur de vitesse de rotation selon au moins l'une des revendications 1 à 15 dans des véhicules automobiles, en particulier dans un système de régulation de véhicules automobiles.

Fig. 1

Fig. 2

Fig. 3

Fig. 4

Fig. 5

Fig.6

Fig. 7

Fig. 8

Fig. 9

Fig. 10

Fig. 11

Fig.12

Fig.13

Fig.14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6230563 B1
- WO 2006034706 A1
- US 20050072231 A1
- WO 2005103620 A1